# EUROPEAN PATENT APPLICATION

(11) **EP 4 844 749 A1**
(43) Date of publication of application: **25.11.2026**
(21) Application number: 25768548.7
(22) Date of filing: 27.02.2025
(51) Int. Cl.: G10L 15/22, G10L 15/04, G10L 15/183, G10L 15/18, G10L 15/26, G06F 3/16, G06F 40/30, G06F 40/56

(54) **ELECTRONIC DEVICE AND METHOD OF PROCESSING USER UTTERANCE**

(30) Priority: 05.03.2024 KR 20240031374; 24.04.2024 KR 20240054838
(71) Applicant: Samsung Electronics Co., Ltd., Suwon-si, Gyeonggi-do 16677 (KR)
(72) Inventor: PARK, Sangmin, Suwon-si Gyeonggi-do 16677 (KR); KIM, Kyungtae, Suwon-si Gyeonggi-do 16677 (KR); SONG, Gajin, Suwon-si Gyeonggi-do 16677 (KR)
(74) Representative: Gulde & Partner
(86) International application number: PCT/KR2025/002761
(87) International publication number: WO 2025/188024

(57) **Abstract**

An operation method of an electronic device according to one embodiment may comprise an operation of obtaining text indicating a command to be performed by the electronic device, on the basis of a user input. The operation method may comprise an operation of rephrasing the text. The operation method may comprise an operation of generating, on the basis of the text, information on a candidate function translated into a language different from a language in which supported functions are configured from among functions supported by the electronic device. The operation method may comprise an operation of generating a prompt on the basis of the rephrased text and the information on the candidate function. The operation method may comprise an operation of inputting the prompt into a language model to obtain an output corresponding to the user input.

## Description

### TECHNICAL FIELD

The following embodiments relate to an electronic device and a method of processing a user utterance.

### BACKGROUND ART

A generative model (e.g., generative artificial intelligence (AI)) may be an AI model that generates new data based on input data. The generative model may be used for a user utterance processing system, such as a voice agent (e.g., a voice assistant).

To train a language model (e.g., a large language model) used for the voice assistance, a method of using a large amount of English data and a small amount of other language data may be widely used. The large language model may use a large amount of training data (e.g., corpora) for training and may be trained with respect to languages other than English with a small amount of cross-data. Since a larger amount of English data is advantageous in various benchmarks, the proportion of English data is increasing.

The above information may be presented as the related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

A method of operating an electronic device according to an embodiment may include, based on a user input, obtaining text indicating a command to be executed by the electronic device. The method may include rephrasing the text. The method may include, based on the text, among functions supported by the electronic device, generating information about a candidate function translated into a language that is different from a language forming the supported functions. The method may include, based on the rephrased text and the information about the candidate function, generating a prompt. The method may include, obtaining an output corresponding to the user input by inputting the prompt to a language model. The rephrased text may be obtained by a language model that is different from the language model.

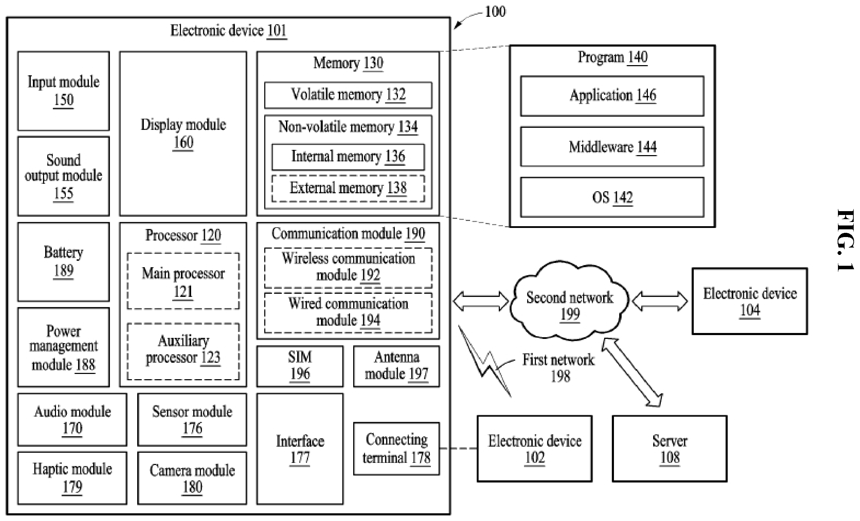

An electronic device (e.g., the electronic device 101 of FIG. 1) may include at least one processor (e.g., the processor 120 of FIG. 1). The electronic device may include memory (e.g., the memory 130 of FIG. 1) storing instructions. The instructions, when individually or collectively executed by the at least one processor, may cause the electronic device to, based on a user input, obtain text indicating a command to be executed by the electronic device. The instructions, when individually or collectively executed by the at least one processor, may cause the electronic device to rephrase the text. The instructions, when individually or collectively executed by the at least one processor, may cause the electronic device to, based on the text, among functions supported by the electronic device, generate information about a candidate function translated into a language that is different from a language forming the supported functions. The instructions, when individually or collectively executed by the at least one processor, may cause the electronic device to, based on the rephrased text and the information about the candidate function, generate a prompt. The instructions, when individually or collectively executed by the at least one processor, may cause the electronic device to obtain an output corresponding to the user input by inputting the prompt to a language model. The rephrased text may be obtained by a language model that is different from the language model.

### BRIEF DESCRIPTION OF DRAWINGS

FIG. 1 is a block diagram illustrating an electronic device in a network environment according to an embodiment.
FIG. 2 is a diagram illustrating a generative artificial intelligence (AI) system according to an embodiment.
FIG. 3 is a diagram illustrating a user utterance processing system according to an embodiment.
FIG. 4 is a diagram illustrating information about a function supported by an electronic device according to an embodiment.
FIGS. 5 to 7 are diagrams illustrating operations of a user utterance processing system according to an embodiment.
FIG. 8 is a flowchart illustrating operations performed by an electronic device according to an embodiment.
FIG. 9 is a flowchart illustrating operations performed by an electronic device according to an embodiment.
FIG. 10 is a flowchart illustrating operations performed by an electronic device according to an embodiment.
FIG. 11 is a flowchart illustrating operations performed by an electronic device according to an embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements, and a repeated description related thereto is omitted.

FIG. 1 is a block diagram illustrating an electronic device in a network environment according to an embodiment.

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134.

According to an embodiment, the processor 120 may be implemented as circuitry (e.g., processing circuitry), such as system on chip (SoC) or an integrated circuit (IC). The processor 120 may include one or more processors. For example, the processor 120 may include a combination of one or more processors, such as a CPU, a GPU, a microprocessor unit (MPU), an AP, and a CP.

According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto.

According to an embodiment, the memory 130 may include one or more memories. The instructions stored in the memory 130 may be stored in one memory. The instructions stored in the memory 130 may be divided and stored in a plurality of memories. The instructions stored in the memory 130 may be executed by one processor (e.g., the main processor 121 or the auxiliary processor 123 such as a CP) or a plurality of processors (e.g., the main processor 121 and the auxiliary processor 123) operating cooperatively.

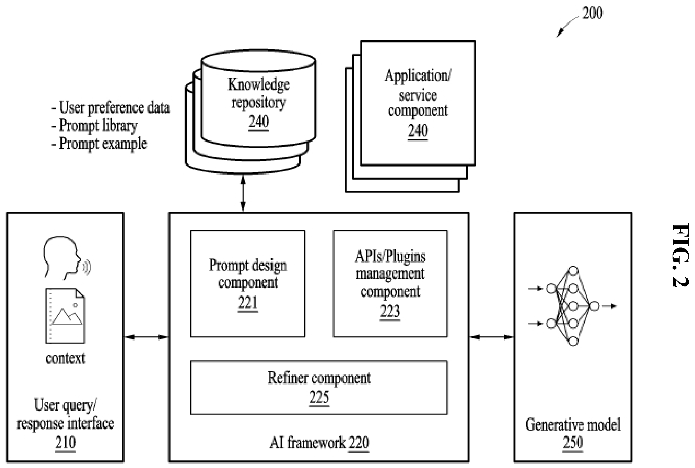

According to an embodiment, the instructions stored in the memory 130 may be individually or collectively executed by the processor 120 to cause the electronic device 101 to perform and/or control a user utterance processing method described with reference to FIGS. 2 to 11. The instructions stored in the memory 130 may be individually or collectively executed by a plurality of processors (e.g., the processor 123 and/or the auxiliary processor 123) to cause the electronic device 101 to perform and/or control the user utterance processing method described with reference to FIGS. 2 to 11. According to an embodiment, the memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104, or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic apparatus 101 and the external electronic apparatus 104 via the server 108 coupled with the second network 199. Each of the electronic devices 102 or 104 may be a device of a same type as, or a different type, from the electronic device 101. According to an embodiment, all, or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

FIG. 2 is a diagram illustrating a generative artificial intelligence (AI) system according to an embodiment.

Referring to FIG. 2, according to an embodiment, a generative AI system 200 may be a program (e.g., a software module) implemented on an electronic device (e.g., the electronic device 101 of FIG. 1) and/or a server (e.g., the server 108 of FIG. 1).

According to an embodiment, a user query/response interface 210 may receive a user input. The user input may include natural language, an image, audio, and/or a video. In addition, when the user input is transmitted, context information may also be transmitted. The context information may include various pieces of side information related to the time at which the user input is input to the generative AI system 200. For example, the side information may include information about an application currently used by a user (application information) or information about a location of the user (location information). In addition, the user input may be a combination of the natural language, image, audio, video, and/or the context information. In addition, the user input may include a non-natural language input, such as selecting a menu.

According to an embodiment, the user query/response interface 210 may provide the user with an output of the generative AI system. The output may include a natural language-based response and/or specific content. The output may also include an action requested by the user.

According to an embodiment, an AI framework 220 may receive a user input. The AI framework 220 may coordinate and/or control one or more components required to perform an operation corresponding to the user's intent, based on the user input (e.g., a user query).

According to an embodiment, the user input received from the user query/response interface 210 may be transmitted to a prompt design component 221. The prompt design component 221 may be used to generate a prompt appropriate as input to a generative model (e.g., a large language model (LLM) and/or a large multimodal model (LMM)) based on the user input.

According to an embodiment, the prompt design component 221 may be an AI component using a machine learning algorithm or a neural network. The prompt design component 221 may generate an improved prompt by learning over time. The prompt design component 221 may access a knowledge repository (or component) 230 to generate the prompt based on the user input. The knowledge repository 230 may include user preference data, a prompt library, and/or prompt examples. The prompt design component 221 may provide the generated prompt to a generative model (e.g., an LLM and/or an LMM).

According to an embodiment, an application programming interfaces (APIs)/Plugins management component 223 may communicate with an external information source based on a request for additional information when the user input is transmitted to the generative model.

According to an embodiment, the APIs/Plugins management component 223 may establish a communication channel for communication with an external system of the system 200 via an API. The APIs/Plugins management component 223 may access various data sources via the communication channel. The obtained information may be used by the prompt design component 221 to generate a prompt together with the user input or may be used as input to a generative model 250.

According to an embodiment, when a final action corresponding to the user input needs to be performed by an application or a service rather than an intermediate action, the APIs/Plugins management component 223 may request the final action via the API.

According to an embodiment, a refiner component 225 may finely tune an output of the generative model 250. For example, the refiner component 225 may determine a relevance (e.g., a score) between an output (e.g., content) of the generative model and the user input. For example, the refiner component 225 may determine whether the output includes biased information (e.g., selective information). For example, the refiner component 225 may determine whether the output includes harmful information (e.g., violent content or profanity).

According to an embodiment, the refiner component 225 may determine a matching degree (e.g., a score) between the output of the generative model 250 and the user input (e.g., an intent of the user input). When the refiner component 225 determines that the output of the generative model 250 does not correspond to the user input, the refiner component 225 may modify the output to correspond to the user input.

According to an embodiment, the refiner component 225 may provide a hint (e.g., a hint for prompt generation) to the user such that the user may obtain information matching the user's intent from the generative model 250.

According to an embodiment, the generative model 250 may refer to an AI neural network for generating new data (e.g., text, images, audio, or video) based on the user input (e.g., a user utterance). The generative model 250 may include an image generation model and/or a language generation model.

According to an embodiment, the image generation model may include a generative adversarial network (GAN) and/or a variational autoencoder (VAE). An example of the image generation model may be a diffusion-based generative model having a structure of a VAE and a transformer.

According to an embodiment, the language generation model (e.g., ChatGPT) may be trained to generate a statistically most appropriate output based on input. The language generation model may include an LMM. The LMM may identify various types of inputs, such as text, an image, audio (e.g., voice), and/or a video, and may generate new data corresponding to the input.

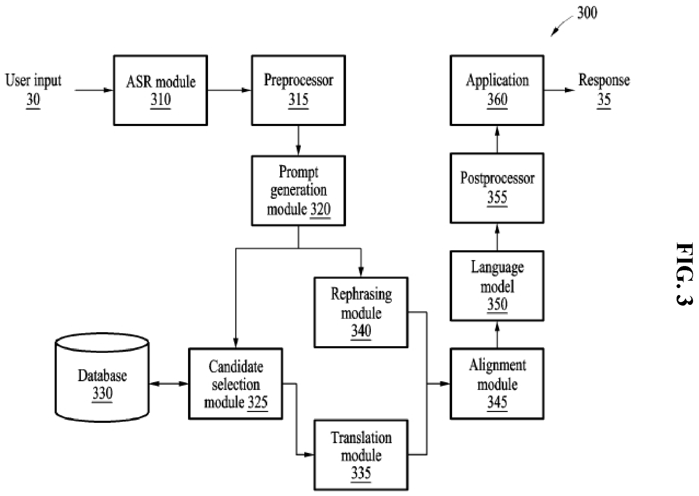

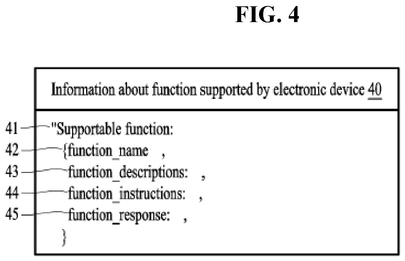

FIG. 3 is a diagram illustrating a user utterance processing system according to an embodiment, and FIG. 4 is a diagram illustrating information about a function supported by an electronic device according to an embodiment.

Referring to FIG. 3, according to an embodiment, a user utterance processing system 300 may be a system for a voice agent (e.g., a voice assistant). The user utterance processing system 300 may include a language model 350 (e.g., the generative model 250 of FIG. 2).

According to an embodiment, the user utterance processing system 300 may generate a prompt suitable for a language model (e.g., the language model 350) based on training data formed in a first language and/or a second language. The amount of training data formed in the first language may be greater than the amount of training data formed in the second language. The first language may be a dominant language (e.g., English), and the second language may be a minority language (e.g., languages other than English, including Korean). The prompt generated by the user utterance processing system 300 may be formed in the minority language (e.g., Korean). The user utterance processing system 300 may rephrase a prompt formed in the minority language such that the prompt matches the dominant language, instead of generating (or translating) the prompt into the dominant language. The prompt of the user utterance processing system 300 may have a high recognition rate for the language model (e.g., the generative model). The prompt of the user utterance processing system 300 may be generated by considering a function supported by the voice assistant.

According to an embodiment, the user utterance processing system 300 may use an AI model to generate a prompt.

According to an embodiment, the AI model (or an AI neural network) may include not only a language model but also other AI neural network models and/or various foundation models, such as a code model or an image model. The AI model may include an LLM and/or a large vision model (LVM). For ease of description, the present disclosure uses an LLM and/or an LVM as an example.

The AI model used in the present disclosure may include an LLM, which is an AI neural network-based language model trained with a large amount of text data through pre-training. The LLM may include relatively more parameters (e.g., about more than 10 billion parameters) compared to a conventional general language model. The LLM may use a transformer AI neural network structure based on an attention mechanism.

According to an embodiment, training the LLM may include pre-training and/or fine-tuning. Pre-training may include a process of training the LLM to acquire general language knowledge using a large amount of text data. For example, pre-training may include self-supervised learning for predicting a next word using a previous word sequence of a text sequence. Fine-tuning may include a process of training the LLM to be suitable for a given domain (e.g., a chatbot, an AI assistant, translation, summary generation, and question and answer) and/or a task. Fine-tuning may include a process of additionally training (e.g., supervised learning and adaptive learning) the LLM using a dataset corresponding to the given domain and/or task based on a pre-trained model. The LLM may perform a task based on a text input including natural language referred to as a prompt.

According to an embodiment, fine-tuning may be omitted from the training of the LLM. The user may control a prompt to be input to the LLM to improve the performance for a desired task. For example, the user may control the prompt to additionally provide an example of a task and/or guidance for performing the task in a manner such as in-context learning, zero-shot learning, and/or few-shot learning. Bidirectional encoder representations from transformer (BERT) and generative pre-trained transformer (GPT) may be public LLMs.

The term "LLM" may refer to a language neural network model, but may also refer to a model of an LLM-based application (e.g., a chatbot, an AI assistant, translation, summary generation, text classification, or sentence generation). For example, an LLM-based chatbot, such as ChatGPT, or an LLM-based translator may also be referred to as the "LLM".

The "LLM" may include an inference engine using an LLM neural network model. For example, 'inputting an input prompt to an LLM' may refer to 'inputting an input prompt to an LLM-based inference engine'. For example, "an output of an LLM for an input prompt" may refer to output information of a last neural network layer of the LLM obtained when the input prompt is input to the LLM-based inference engine and/or output information modified through additional processing.

An attention mechanism is a technology that allows an AI model to focus its attention on an important part of input data. The attention mechanism may be used to predict output data by predicting a degree to which a portion of time-series input data (e.g., time-series input data, such as voice or video, or input data of some layers of a neural network) contributes to an output of an intermediate layer of the neural network and/or a final output. A recurrent neural network (RNN) that sequentially processes each element of a sequence may show degraded prediction performance when there is information dependency between long-range time series, but the attention mechanism may consider the information dependency between long-range time series by controlling a weight attention level in the entire and/or partial context of the input data. A transformer may include an encoder-decoder structure. The encoder may output compressed information (e.g., a contextual representation) by processing input data. The decoder may output data in the unit of a token by processing the compressed information. The encoder and decoder may each include an independent attention network and may further include a cross-attention network for connecting the encoder to the decoder.

According to an embodiment, the user utterance processing system 300 may include one or more components 310 to 360. The components 310 to 360 may be a software module and/or a neural network model implemented on an electronic device (e.g., the electronic device 101 of FIG. 1) or a server (e.g., the server 108 of FIG. 1). The components 310 to 360 are illustrated as an example for describing the user utterance processing system 300. Accordingly, the user utterance processing system 300 may include various modifications of the components 310 to 360 as long as the operations of the user utterance processing system 300 described herein are implemented. For example, two or more components may be combined, or one or more components may be added or omitted. Alternatively, the user utterance processing system 300 may further include one or more components of components (e.g., the components 210 to 250 of FIG. 2) of a generative AI system (e.g., the generative AI system 200 of FIG. 2).

According to an embodiment, the user utterance processing system 300 may include an automatic speech recognition (ASR) module 310, a preprocessor 315, a prompt generation module 320, a candidate selection module 325, a database 330, a rephrasing module 340, a translation module 335, a language model 350 (e.g., the generative model 250 of FIG. 2), an alignment module 345, a postprocessor 355, and/or an application 360.

According to an embodiment, the ASR module 310 may convert a speech signal (e.g., an analog signal) (e.g., a user input 30) into text data. When the user input is in the form of text, an operation of the ASR module 310 may be omitted.

According to an embodiment, the preprocessor 315 may perform preprocessing on the text data. For example, the preprocessor 315 may perform tokenization for splitting text into tokens (e.g., words, phrases, and/or symbols). For example, the preprocessor 315 may remove an unnecessary character (e.g., a character such as '!' or '?') from the text data to generate a response 35.

According to an embodiment, the prompt generation module 320 (e.g., the design component 221 of FIG. 2) may generate a prompt (e.g., text indicating a command to be executed by the user utterance processing system 300 (e.g., the electronic device 101 of FIG. 1)). The prompt may be data (e.g., text, javascript object notation (JSON), an image, audio, and/or a video) provided to the rephrasing module 340, the translation module 335, and/or the language model 350 to generate new data (e.g., a response). Based on text data corresponding to a user utterance and a condition (e.g., the length or writing style) related to the response 35, the prompt generation module 320 may generate a prompt that the rephrasing module 340, the translation module 335, and/or the language model 350 is able to understand.

According to an embodiment, the rephrasing module 340 may be configured to rephrase a prompt generated by the prompt generation module 320. The rephrasing module 340 may perform a rephrasing operation. For example, the rephrasing module 340 may perform the rephrasing operation using a syntactic parser, a rule (e.g., a predefined rule), and/or an AI model (e.g., an image generation model and/or a language model). The rule may be a predefined rule and may be updated through training.

According to an embodiment, the rephrasing module 340 may include an AI neural network for generating new data (e.g., text, an image, audio, or a video) based on an input (e.g., a prompt). The rephrasing module 340 may include an image generation model and/or a language model (e.g., a language generation model).

According to an embodiment, the rephrasing module 340 may be implemented as a generative model. The translation module 335 and the language model 350 may also be implemented as generative models. In this case, the rephrasing module 340, the translation module 335, and the language model 350 may be classified based on training data. The rephrasing module 340, the translation module 335, and the language model 350 may be trained with different training data. The rephrasing module 340, the translation module 335, and the language model 350 may be trained with different data depending on the purpose.

According to an embodiment, the rephrasing module 340 may receive a prompt (e.g., text indicating a command to be executed by the user utterance processing system 300 (e.g., the electronic device 101 of FIG. 1) and may output a rephrased prompt (e.g., text). In relation to rephrasing, the rephrasing module 340 may update an ending or particle of a word included in the input prompt (e.g., text). In relation to rephrasing, the rephrasing module 340 may update a foreign-language word or a loanword included in the input prompt (e.g., text). In relation to rephrasing, the rephrasing module 340 may update a verb included in the input prompt (e.g., text). In relation to rephrasing, the rephrasing module 340 may normalize the updated prompt (e.g., text) overall. The rephrased prompt (e.g., text) may be rephrased to increase the recognizability of the language model 350. In other words, the rephrasing module 340 may transform the input prompt (e.g., text) according to a rule for the language model 350 to use. In this case, the rule may be based on training data (e.g., corpora) of the language model 350.

According to an embodiment, the training data (e.g., corpora) of the language model 350 may be formed in a literary language. Accordingly, a user utterance (e.g., a user utterance with omitted particles) formed in a colloquial language may be different from the training data of the language model 350. The rephrasing module 340 may update an ending or particle of a word of input text (e.g., a prompt) such that the input text corresponds to the literary language. For example, when text (e.g., a prompt) including ' 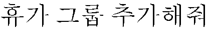 (hyuga geurup chugahaejwo)' is input, the rephrasing module 340 may update the text to ' 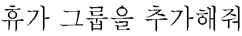 (hyuga geurubeul chugahaejwo)'. For example, when text including ' 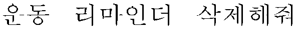 (undong rimaindeo sakjehaejwo)' is input, the rephrasing module 340 may update the text to ' 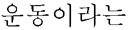 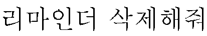 (undongiraneun rimaindeo sakjehaejwo)'. Although an example of updating a particle in Korean is described, the rephrasing module 340 may update input text (e.g., a prompt) by considering particles or endings (e.g., gender endings in German) of other languages.

According to an embodiment, a foreign-language word or a loanword may be represented as multiple words. For example, the English word 'stopwatch' may be represented as (translated into) the Korean word, ' 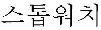 (seutopwachi)', ' 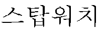 (seutapwachi)', or ' 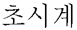 (chosigye)'. Accordingly, the rephrasing module 340 may update the foreign-language word or the loanword included in the input text (e.g., the prompt) by considering a word proportion included in the training data (e.g., corpora) of the language model 350.

According to an embodiment, users may make an utterance including verbs so that commands, requests, and declarative sentences are not distinguished. Accordingly, depending on the training data of the language model 350, an expression form of a verb (e.g., a verb included in a prompt input to the language model 350) may result in a difference in a recognition rate. For example, the language model 350 may recognize ' 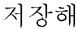 (jeojanghae)' better than ' 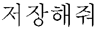 (jeojanghaejwo)'. The rephrasing module 340 may update (e.g., normalize) a verb included in input text.

According to an embodiment, the rephrasing module 340 may normalize updated text (e.g., an updated ending or particle of a word, an updated foreign-language word or loanword, and/or an updated verb). Updating each element may be reasonable, but combining the updated elements may not be an appropriate representation. The rephrasing module 340 may normalize the entire updated text (e.g., the prompt) once again.

According to an embodiment, although the present disclosure describes that text (e.g., a prompt) rephrasing is performed by the rephrasing module 340, text rephrasing may also be performed based on a predefined rule or a syntactic parser. In addition, the rephrasing module 340 may be implemented as a combination of software modules and/or generative models, rather than a single generative model. The rephrasing module 340 may be trained with a small amount of data compared to the language model 350.

According to an embodiment, the translation module 335 may translate information about a candidate function formed in a dominant language (e.g., a second language) (e.g., English) into a minority language (e.g., a first language) (e.g., Korean).

According to an embodiment, the translation module 335 may include an AI neural network for generating new data (e.g., text, an image, audio, or a video) based on an input (e.g., a prompt). The translation module 335 may include an image generation model and/or a language model (e.g., a language generation model).

According to an embodiment, the translation module 335 may be implemented as a generative model. As described above, the rephrasing module 340 and the language model 350 may also be implemented as generative models, but the rephrasing module 340, the translation module 335, and the language model 350 may be distinguished based on training data. The rephrasing module 340, the translation module 335, and the language model 350 may be trained with different training data. The rephrasing module 340, the translation module 335, and the language model 350 may be trained with different data depending on the purpose.

According to an embodiment, a function herein may be a function supported by the user utterance processing system 300 (e.g., the electronic device 101 of FIG. 1). In other words, hereinafter, the function may correspond to a function (e.g., a function to perform a task or provide information through a voice command) (e.g., a weather information providing function, a schedule management function, an alarm setting function, a search and information providing function, a translation service function, and/or a note writing function) supported by a voice assistant. Information about the function supported by the user utterance processing system 300 (e.g., the electronic device 101 of FIG. 1) may be stored in the database 330. Before describing the translation module 335, the information about the function supported by the user utterance processing system 300 (e.g., the electronic device 101 of FIG. 1) is described first.

Referring to FIG. 4, according to an embodiment, an example of information 40 about a function stored in the database 330 is provided. The information 40 about the function supported by the electronic device 101 (e.g., the user utterance processing system 300) may include function_name 42, function_descriptions 43, function_instructions 44, and function_responses 45, in relation to a supportable function 41.

According to an embodiment, the function_name 42 may be a name of the supportable function 41. The function_descriptions 43 may include an overall description of the function. The function_descriptions 43 may include an overview of what functions are provided via the supportable function 41 and/or how the supportable function 41 operates. The function_instructions 44 may include a method of using the supportable function 41 and/or step-by-step instructions. The function_instructions 44 may provide detailed and specific steps regarding the method of using the supportable function 41. The function_instructions 44 may help with the proper use of the function. The function_responses 45 may include a response method with respect to the supportable function 41. For example, regarding a function to respond to a question about a new feature of the electronic device 101, the function_name 42 may include " 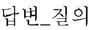 _for_ 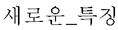 " ("response_query_for_new_feature"), and the function_descriptions 43 may include " 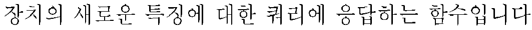 . ' 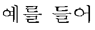 , S24 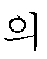 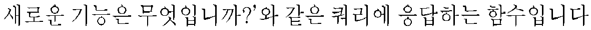 ." (It is a function to respond to a query about a new feature of the device. For example, it is a function to respond to a query, such as "What is a new feature of S24?"), and the function_instructions 44 may include " 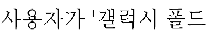 5 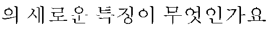 ', ' 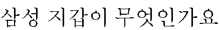 ' 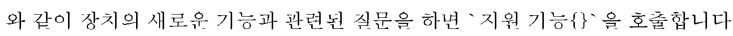 . n params: Wn - 'user_saying(str)' : 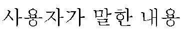 n - 'devices(str)' : 'TV', ' 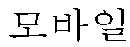 ' 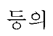 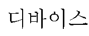 " ("When the user asks a question about a new feature of the device, such as "What is the new feature of Galaxy Fold 5' or 'What is Samsung wallet?', 'Supportable function{}' is invoked. \n params: \n - 'user_saying(str)': what the user said \n - 'devices(str)': 'TV', 'mobile' devices"), and the function_response 45 may include "" 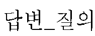 _for_ 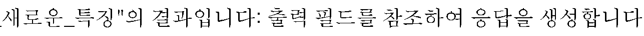 ." ("The result of "Response_query_for_new_feature": Generate a response by referring to the output field.") For ease of description, the information 40 about the function stored in the database 330 is in Korean, but the information 40 about the function may be formed in the dominant language (e.g., the second language) (e.g., English) and may be stored.

According to an embodiment, the candidate selection module 325 may select information about a candidate function among the information about the function stored in the database 330. The candidate selection module 325 may be implemented via an artificial neural network. For example, the candidate selection module 325 may be implemented via a question answering (QA) module (e.g., a module including retrieval, reranker, and/or reader) or a retrieval augmented generation (RAG) module. The candidate selection module 325 may be used to reduce a search space for the database 330.

According to an embodiment, the candidate selection module 325 may select information about the candidate function based on a similarity between text (e.g., a prompt) (e.g., an output of the prompt generation module 320) and the information about the function. As described above, the information about the function may be formed in the second language (e.g., the dominant language) (e.g., English) and may be stored in the database 330, and the text (e.g., the prompt) may be formed in the first language (e.g., the minority language) (e.g., Korean). The candidate selection module 325 may include a multilingual model trained based on data formed in the first language and data formed in the second language, and the similarity between two pieces of information formed in different languages may be calculated by the multilingual model.

According to an embodiment, the translation module 335 may translate information about a candidate function formed in a dominant language (e.g., a second language) (e.g., English) into a minority language (e.g., a first language) (e.g., Korean). The translation module 335 may include an embedding that is the same as an embedding of the language model 350. The embedding may be related to a process of transforming human natural language into a machine-understandable vector in natural language processing. The embedding may be implemented as a neural network and may be included in the translation module 335. As described above, the training data of the language model 350 may be associated with the voice assistant, and the training data associated with the voice assistant may be different from training data of a typical language model. The recognition rate of the language model 350 may be improved by translating text (e.g., the prompt) to be input to the language model 350 by utilizing the translation module 335 including the embedding that is the same as the language model 350.

According to an embodiment, compared to the language model 350, the translation module 335 may include a compressed embedding and may be trained with a small amount of data. It shall be noted that as the language model 350 and/or the database 330 is updated, the rephrasing module 340 and/or the translation module 335 may also be updated.

According to an embodiment, the alignment module 345 may generate candidate prompts, based on the rephrased text (e.g., an output of the rephrasing module 340) and the information (e.g., an output of the translation module 335) about the candidate function. Matching between the rephrased text (e.g., the output of the rephrasing module 340) and the information (e.g., the output of the translation module 335) about the candidate function may include machine learning-based matching, natural language grammar-based syntactic matching, semantic matching, and sentence similarity-based similarity matching, and/or index matching. The rephrased text (e.g., the output of the rephrasing module 340) and the information (e.g., the output of the translation module 335) about the candidate function may be formed in the first language (e.g., the minority language), and candidate prompts generated by the matching described above may include priorities assigned based on a linguistic feature of the first language (e.g., the minority language). The alignment module 345 may select a prompt to be input to the language model 350 from the candidate prompts, based on the priority.

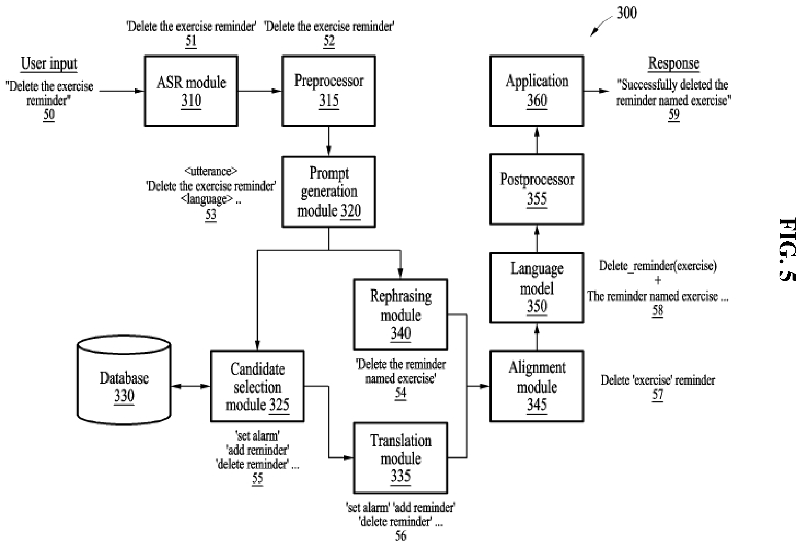

According to an embodiment, the language model 350 may receive a prompt and may generate an output (e.g., an output 58 of FIG. 5) corresponding to the user input 30. As described above, the output of the language model 350 may correspond to a function supported by the voice assistant (e.g., the user utterance processing system 300).

According to an embodiment, the language model 350 may include an AI neural network for generating new data (e.g., text, an image, audio, or a video) based on an input (e.g., a prompt). The language model 350 may include an image generation model and/or a language model (e.g., a language generation model).

According to an embodiment, the language model 350 may be implemented as a generative model. As described above, the rephrasing module 340 and the translation module 335 may also be implemented as generative models, but the rephrasing module 340, the translation module 335, and the language model 350 may be distinguished based on training data. The rephrasing module 340, the translation module 335, and the language model 350 may be trained with different training data. The rephrasing module 340, the translation module 335, and the language model 350 may be trained with different data depending on the purpose. The language model 350 may be for generating an output (e.g., the output 58 of FIG. 5) corresponding to the user input 30. The output of the language model 350 may be related to a function supported by the user utterance processing system 300 (e.g., the electronic device 101 of FIG. 1). In other words, the language model 350 may be trained with data associated with the function supported by the voice assistant. The training data of the language model 350 may include training data formed in a dominant language (e.g., the second language) (e.g., English) and training data formed in a minority language (e.g., the first language) (e.g., Korean). In the training data of the language model 350, the training data formed in the dominant language (e.g., the second language) (e.g., English) may be greater than the training data formed in the minority language (e.g., the first language) (e.g., Korean). According to an embodiment, the postprocessor 355 may perform postprocessing on an output (e.g., a natural language-based response) generated by the language model 350. For example, the postprocessor 355 may add a character (e.g., an emoji) or may remove an unnecessary word and/or an unnecessary sentence.

According to an embodiment, the application 360 may execute an output (e.g., an instruction) generated by the language model 350. In other words, the application 360 may perform an operation corresponding to the output. After the application 360 performs the operation, the user utterance processing system 300 may provide the natural language-based response 35 to the user.

FIGS. 5 to 7 are diagrams illustrating operations of a user utterance processing system according to an embodiment.

Referring to FIG. 5, according to an embodiment, the user utterance processing system 300 (e.g., the electronic device 101 of FIG. 1) may generate an output 58 (an instruction Delete_reminder (exercise) to be performed by the application 360 and a natural language-based response "successfully deleted the reminder named exercise") corresponding to a user input 50 (" 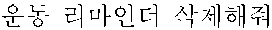 " ("delete the exercise reminder")). The user utterance processing system 300 may perform an operation corresponding to the output 58 via the application 360 and may provide a user with a response 59 corresponding to the output 58. The user input 50 (" 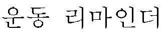 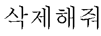 "("delete the exercise reminder")) and the response 59 ("successfully deleted the reminder named exercise") may be formed in a first language (e.g., the minority language) (e.g., Korean), and the language model 350 for a voice assistant may be trained with data formed in a second language (e.g., the dominant language) (e.g., English).

According to an embodiment, based on the ASR module 310, the user utterance processing system 300 may obtain text data 51 (' 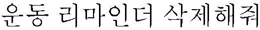 '('delete the exercise reminder')) from the user input 50 (" 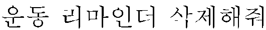 " ("delete the exercise reminder")).

According to an embodiment, based on the preprocessor 315, the user utterance processing system 300 may preprocess the text data 51 ('delete the exercise reminder').

According to an embodiment, based on the prompt generation module 320, the user utterance processing system 300 may generate a prompt 53 from text data 52 ('delete the exercise reminder') (e.g., an output of the preprocessor 315). The prompt 53 may correspond to text indicating a command to be executed by the user utterance processing system 300 (e.g., the electronic device 101 of FIG. 1).

According to an embodiment, based on the rephrasing module 340, the user utterance processing system 300 may rephrase the text 53 (e.g., the prompt). Rephrased text 54 ('delete the reminder called exercise') may be rephrased to be similar to the training data (e.g., corpora) of the language model 350. Since the detailed description of text rephrasing is provided with reference to FIG. 3, a repeated description thereof is omitted. The rephrasing module 340 may be trained with a small amount of data compared to the language model 350.

According to an embodiment, based on the candidate selection module 325, the user utterance processing system 300 may select information 55 about the candidate function ('set alarm', 'add reminder', 'delete reminder' ...) from the information (e.g., the information about the functions supported by the user utterance processing system 300 (e.g., the electronic device 101) stored in the database 330.

According to an embodiment, based on the translation module 335, the user utterance processing system 300 may translate the information 55 ('set alarm', 'add reminder', 'delete reminder' ...) about the candidate function formed in the second language (e.g., the dominant language) (e.g., English) into the first language (e.g., the minority language) (e.g., Korean) (e.g., ' 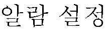 ', ' 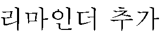 ', ' 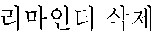 ' ...56).

According to an embodiment, based on the alignment module 345, the user utterance processing system 300 may generate a prompt 57 (e.g., delete the 'exercise' reminder) from the rephrased text 54 ('delete the reminder named exercise') and information 56 ('set alarm', 'add reminder', 'delete reminder', ...) about the candidate function.

According to an embodiment, based on the language model 350, the user utterance processing system 300 may generate an output 58 (an instruction Delete_reminder (exercise) to be executed by the application 360 and a natural language-based response "successfully deleted the reminder named exercise") from the prompt 57 (delete the 'exercise' reminder). In the training data of the language model 350, the training data formed in the second language (e.g., the dominant language) (e.g., English) may be greater than the training data formed in the first language (e.g., the minority language) (e.g., Korean).

According to an embodiment, based on the postprocessor 355, the user utterance processing system 300 may postprocess an output (e.g., the natural language-based response) generated by the language model 350. For example, the postprocessor 355 may add a character (e.g., an emoji) or may remove an unnecessary word and/or an unnecessary sentence.

According to an embodiment, the user utterance processing system 300 may perform an operation corresponding to the output 58 via the application 360. For example, the user utterance processing system 300 may delete a reminder associated with 'exercise' from a schedule management application (e.g., a calendar application). After the application 360 performs the operation, the user utterance processing system 300 may provide the natural language-based response 59 ("successfully deleted the reminder named exercise") to the user.

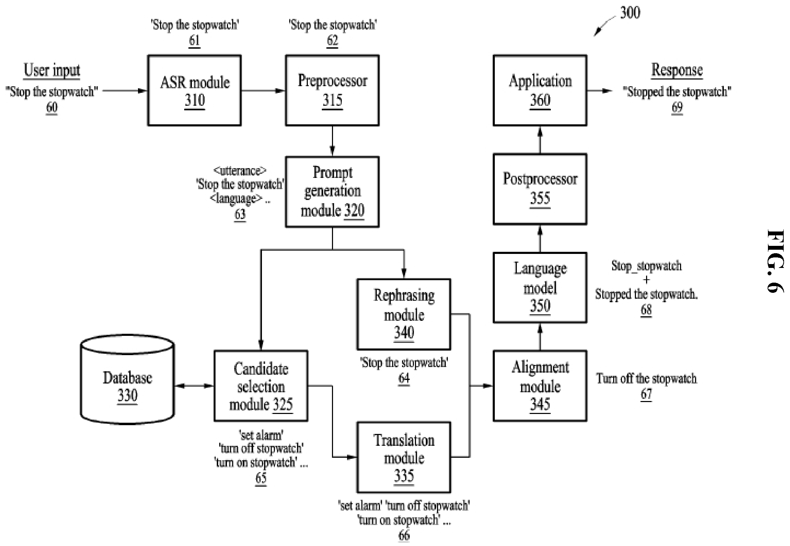

Referring to FIG. 6, according to an embodiment, the user utterance processing system 300 (e.g., the electronic device 101 of FIG. 1) may generate an output 68 (an instruction Stop_stopwatch to be executed by the application 360 and a natural language-based response "stopped the stopwatch") corresponding to a user input 60 (" " ("stop the stopwatch")). The user utterance processing system 300 may perform an operation corresponding to the output 68 via the application 360 and may provide a user with a response 69 corresponding to the output 68.

The stopwatch included in the user input 50 ("stop the stopwatch") may be a loanword (e.g., based on the minority language (e.g., Korean)) and may be represented as multiple words. For example, the English word 'stopwatch' may be represented as the Korean word, ' 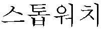 '('seutopwachi'), ' 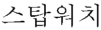 '('seutapwachi'), or ' 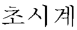 '('chosigye'). However, the word stopwatch (e.g., the expression included in the user input 60) may be included significantly rarely in the training data (e.g., corpora) of the language model 350. In addition, 'stopwatch' may be translated into a stopwatch by a typical translation model, but likewise, the word stopwatch may be included very rarely in the training data (e.g., corpora) of the language model 350. The user utterance processing system 300 according to an embodiment may update a foreign-language word or a loanword included in input text (e.g., the prompt) by considering a word proportion included in the training data (e.g., corpora) of the language model 350. In other words, the user utterance processing system 300 may rephrase the prompt (e.g., text) formed in the minority language (e.g., the first language) (e.g., Korean) to be accurately matched with the dominant language (e.g., the second language) (e.g., English).

According to an embodiment, based on the ASR module 310, the user utterance processing system 300 may obtain text data 61 (' 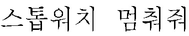 '('stop the stopwatch')) from the user input 60 (" 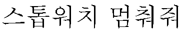 "("stop the stopwatch")).

According to an embodiment, based on the preprocessor 315, the user utterance processing system 300 may preprocess the text data 61 (' 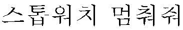 '('stop the stopwatch')).

According to an embodiment, based on the prompt generation module 320, the user utterance processing system 300 may generate a prompt 63 from text data 62 (' 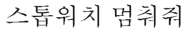 '('stop the stopwatch')) (e.g., an output of the preprocessor 315). The prompt 63 may correspond to text indicating a command to be executed by the user utterance processing system 300 (e.g., the electronic device 101 of FIG. 1).

According to an embodiment, based on the rephrasing module 340, the user utterance processing system 300 may rephrase the text 63 (e.g., the prompt). Rephrased text 64 (' 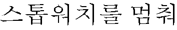 '('stop the stopwatch')) may be rephrased to be similar to the training data (e.g., corpora) of the language model 350. Since the detailed description of text rephrasing is provided with reference to FIG. 3, a repeated description thereof is omitted. The rephrasing module 340 may be trained with a small amount of data compared to the language model 350.

According to an embodiment, based on the candidate selection module 325, the user utterance processing system 300 may select information about the candidate function 65 ('set alarm', 'turn off stopwatch', 'turn on stopwatch' ...) from the information (e.g., the information about the functions supported by the user utterance processing system 300 (e.g., the electronic device 101) stored in the database 330.

According to an embodiment, based on the translation module 335, the user utterance processing system 300 may translate the information 65 ('set alarm', 'turn off stopwatch', 'turn on stopwatch' ...) about the candidate function formed in the second language (e.g., the dominant language) (e.g., English) into the first language (e.g., the minority language) (e.g., Korean) (e.g., ' 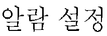 ', ' 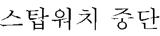 ', ' 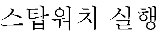 '...66).

According to an embodiment, based on the alignment module 345, the user utterance processing system 300 may generate a prompt 67 (e.g., ' 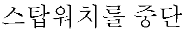 '('turn off the stopwatch')) from the rephrased text 64 (' 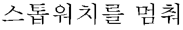 '('stop the stopwatch')) and information 66 (' 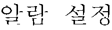 '('set alarm'), ' 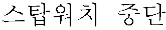 '('turn off stopwatch'), ' 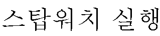 '('turn on stopwatch'), ...) about the candidate function.

According to an embodiment, based on the language model 350, the user utterance processing system 300 may generate an output 68 (an instruction Stop_stopwatch to be executed by the application 360 and a natural language-based response "stopped the stopwatch") from the prompt 67 ('turn off the stopwatch'). In the training data of the language model 350, the training data formed in the second language (e.g., the dominant language) (e.g., English) may be greater than the training data formed in the first language (e.g., the minority language) (e.g., Korean).

According to an embodiment, based on the postprocessor 355, the user utterance processing system 300 may postprocess an output (e.g., the natural language-based response) generated by the language model 350. For example, the postprocessor 355 may add a character (e.g., an emoji) or may remove an unnecessary word and/or an unnecessary sentence.

According to an embodiment, the user utterance processing system 300 may perform an operation corresponding to the output 68 via the application 360. For example, the user utterance processing system 300 may stop a currently running stopwatch in a stopwatch application. After the application 360 performs the operation, the user utterance processing system 300 may provide the natural language-based response 69 ("stopped the stopwatch") to the user.

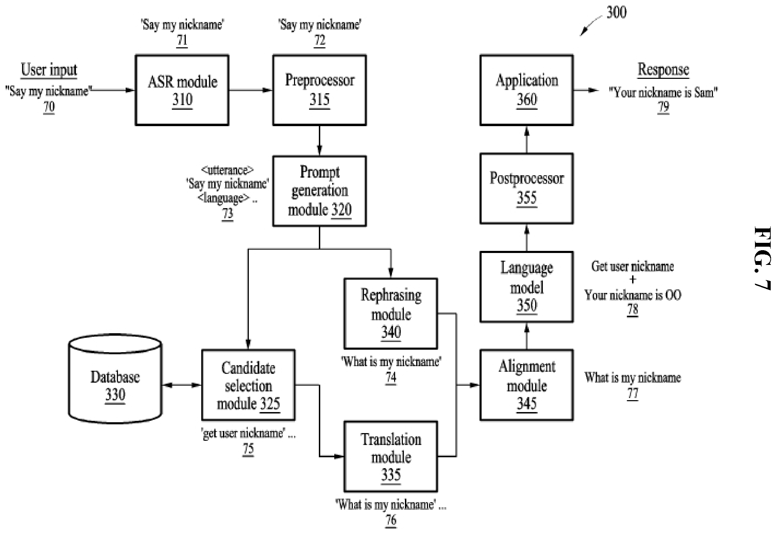

Referring to FIG. 7, according to an embodiment, the user utterance processing system 300 (e.g., the electronic device 101 of FIG. 1) may generate an output 78 (an instruction get user nickname to be executed by the application 360 and a natural language-based response "your nickname is Sam") corresponding to a user input 70 (" 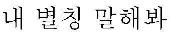 "("say my nickname")). The user utterance processing system 300 may perform an operation corresponding to the output 78 via the application 360 and may provide a user with a response 79 corresponding to the output 78.

The nickname included in the user input 70 (" 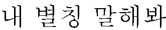 "("say my nickname")) may be a word used to replace a nickname depending on the context. In Korean, the nickname may be an alternative expression for a person, a place, or an object. For example, the nickname "God of soccer" may be given to a soccer player. In addition, the nickname may also be an unofficial name used personally or within a group. A name or nickname used to refer to a person among family, friends, and/or colleagues may be the nickname. The nickname (e.g., the expression included in the user input 70) may be included significantly rarely in the training data (e.g., corpora) of the language model 350. The language model 350 may not provide a voice assistant function related to a nickname. The user utterance processing system 300 according to an embodiment may update a word included in the input text (e.g., the prompt) by considering the function (e.g., the voice assistant function) of the language model 350.

According to an embodiment, based on the ASR module 310, the user utterance processing system 300 may obtain text data 71 (' 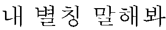 '('say my nickname')) from the user input 70 (" 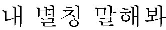 "("say my nickname")).

According to an embodiment, based on the preprocessor 315, the user utterance processing system 300 may preprocess the text data 71 (' 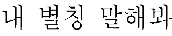 '('say my nickname')).

According to an embodiment, based on the prompt generation module 320, the user utterance processing system 300 may generate a prompt 73 from text data 72 (' 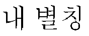 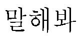 '('say my nickname')) (e.g., an output of the preprocessor 315). The prompt 73 may correspond to text indicating a command to be executed by the user utterance processing system 300 (e.g., the electronic device 101 of FIG. 1).

According to an embodiment, based on the rephrasing module 340, the user utterance processing system 300 may rephrase the text 73 (e.g., the prompt). Rephrased text 74 (' 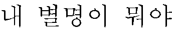 '('what is my nickname')) may be rephrased to be similar to the training data (e.g., corpora) of the language model 350. Since the detailed description of text rephrasing is provided with reference to FIG. 3, a repeated description thereof is omitted. The rephrasing module 340 may be trained with a small amount of data compared to the language model 350.

According to an embodiment, based on the candidate selection module 325, the user utterance processing system 300 may select information 75 about the candidate function ('get user nickname' ...) from the information (e.g., the information about the functions supported by the user utterance processing system 300 (e.g., the electronic device 101) stored in the database 330.

According to an embodiment, based on the translation module 335, the user utterance processing system 300 may translate the information 75 ('get user nickname' ...) about the candidate function formed in the second language (e.g., the dominant language) (e.g., English) into the first language (e.g., the minority language) (e.g., Korean) (e.g., ' 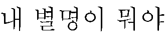 ' ... 76).

According to an embodiment, based on the alignment module 345, the user utterance processing system 300 may generate a prompt 77 (' 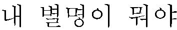 '('what is my nickname')) from the rephrased text 74 (' 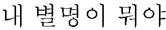 '('what is my nickname')) and the information 76 (' 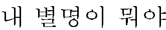 '('what is my nickname') ...) about the candidate function.

According to an embodiment, based on the language model 350, the user utterance processing system 300 may generate an output 78 (an instruction get user nickname to be executed by the application 360 and a natural language-based response "your nickname is OO") from the prompt 77 ('what is my nickname'). In the training data of the language model 350, the training data formed in the second language (e.g., the dominant language) (e.g., English) may be greater than the training data formed in the first language (e.g., the minority language) (e.g., Korean).

According to an embodiment, based on the postprocessor 355, the user utterance processing system 300 may postprocess an output (e.g., the natural language-based response) generated by the language model 350.

According to an embodiment, the user utterance processing system 300 may perform an operation corresponding to the output 78 via the application 360. For example, the user utterance processing system 300 may collect a nickname of a user in a message application. The user utterance processing system 300 may provide the natural language-based response 79 ("your nickname is Sam") to the user.

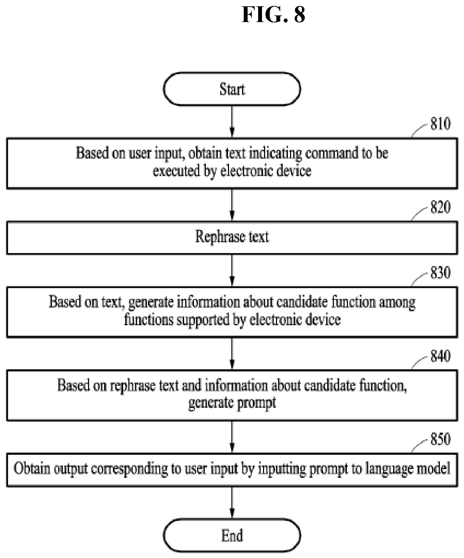

FIG. 8 is a flowchart illustrating operations performed by an electronic device according to an embodiment.

Operations 810 to 850 may be performed sequentially but not necessarily. For example, the order of operations 810 to 850 may be changed, and at least two operations may be performed in parallel.

According to an embodiment, operations 810 to 850 may be understood as being performed by a processor (e.g., the processor 120 of FIG. 1) of an electronic device (e.g., the electronic device 101 of FIG. 1).

In operation 810, the electronic device according to an embodiment may obtain text (e.g., a prompt) indicating a command to be executed by the electronic device based on a user input.

In operation 820, the electronic device according to an embodiment may rephrase the text.

In operation 830, based on the rephrased text, the electronic device according to an embodiment may generate information about a candidate function translated into a language that forms the user input among functions supported by the electronic device.

In operation 840, based on the rephrased text and the information about the candidate function, the electronic device according to an embodiment may generate a prompt.

In operation 850, the electronic device according to an embodiment may obtain an output corresponding to the user input by inputting the prompt to a language model.

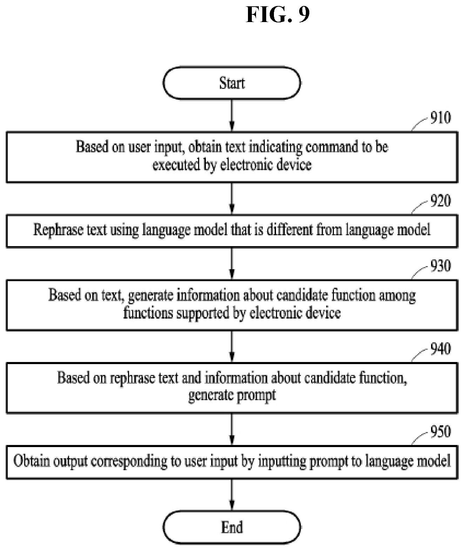

FIG. 9 is a flowchart illustrating operations performed by an electronic device according to an embodiment.

Operations 910 to 950 may be performed sequentially but not necessarily. For example, the order of operations 910 to 950 may be changed, and at least two operations may be performed in parallel.

According to an embodiment, operations 910 to 950 may be understood as being performed by a processor (e.g., the processor 120 of FIG. 1) of an electronic device (e.g., the electronic device 101 of FIG. 1).

In operation 910, the electronic device according to an embodiment may obtain text (e.g., a prompt) indicating a command to be executed by the electronic device based on a user input.

In operation 920, the electronic device may rephrase the text using a language model that is different from a language model (e.g., the language model 350). The electronic device may obtain the rephrased text by inputting the text to a rephrasing module that is a language model that is different from a generative model.

In operation 930, based on the rephrased text, the electronic device according to an embodiment may generate information about a candidate function translated into a language that forms the user input among functions supported by the electronic device.

In operation 940, based on the rephrased text and the information about the candidate function, the electronic device according to an embodiment may generate a prompt.

In operation 950, the electronic device according to an embodiment may obtain an output corresponding to the user input by inputting the prompt to the language model (e.g., the language model 350).

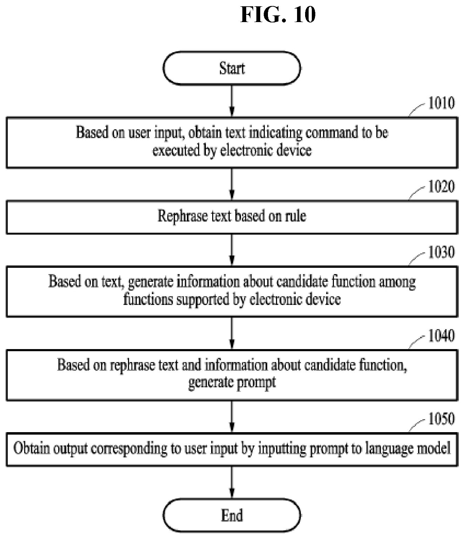

FIG. 10 is a flowchart illustrating operations performed by an electronic device according to an embodiment.

Operations 1010 to 1050 may be performed sequentially but not necessarily. For example, the order of operations 1010 to 1050 may be changed, and at least two operations may be performed in parallel.

According to an embodiment, operations 1010 to 1050 may be understood as being performed by a processor (e.g., the processor 120 of FIG. 1) of an electronic device (e.g., the electronic device 101 of FIG. 1).

In operation 1010, the electronic device according to an embodiment may obtain text (e.g., a prompt) indicating a command to be executed by the electronic device based on a user input.

In operation 1020, the electronic device according to an embodiment may rephrase the text based on a rule. The rule may be a predefined rule and may be updated through training.

In operation 1030, based on the rephrased text, the electronic device according to an embodiment may generate information about a candidate function translated into a language that forms the user input among functions supported by the electronic device.

In operation 1040, based on the rephrased text and the information about the candidate function, the electronic device according to an embodiment may generate a prompt.

In operation 1050, the electronic device according to an embodiment may obtain an output corresponding to the user input by inputting the prompt to a language model.

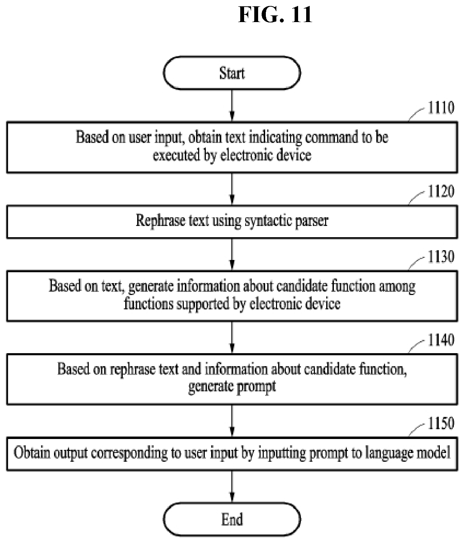

FIG. 11 is a flowchart illustrating operations performed by an electronic device according to an embodiment.

Operations 1110 to 1150 may be performed sequentially but not necessarily. For example, the order of operations 1110 to 1150 may be changed, and at least two operations may be performed in parallel.

According to an embodiment, operations 1110 to 1150 may be understood as being performed by a processor (e.g., the processor 120 of FIG. 1) of an electronic device (e.g., the electronic device 101 of FIG. 1).

In operation 1110, the electronic device according to an embodiment may obtain text (e.g., a prompt) indicating a command to be executed by the electronic device based on a user input.

In operation 1120, the electronic device according to an embodiment may rephrase the text using a syntactic parser.

In operation 1130, based on the rephrased text, the electronic device according to an embodiment may generate information about a candidate function translated into a language that forms the user input among functions supported by the electronic device.

In operation 1140, based on the rephrased text and the information about the candidate function, the electronic device according to an embodiment may generate a prompt.

In operation 1150, the electronic device according to an embodiment may obtain an output corresponding to the user input by inputting the prompt to a language model.

A method of operating an electronic device (e.g., the electronic device 101 of FIG. 1) according to an embodiment may include, based on a user input, obtaining text indicating a command to be executed by the electronic device. The method may include rephrasing the text. The method may include, based on the text, among functions supported by the electronic device, generating information about a candidate function translated into a language that is different from a language forming the supported functions. The method may include, based on the rephrased text and the information about the candidate function, generating a prompt. The method may include, obtaining an output corresponding to the user input by inputting the prompt to a language model. The rephrased text may be obtained by a language model that is different from the language model.

According to an embodiment, the text, the rephrased text, the prompt, and the information about the candidate function may be formed in a first language that forms the user input. The language model may be trained with training data formed in the first language and training data formed in a second language that is different from the first language, and the training data formed in the second language may be greater than the training data formed in the first language.

According to an embodiment, the rephrasing of the text may include updating an ending or a particle of a word comprised in the text. The rephrasing of the text may include updating a foreign-language word or a loanword comprised in the text. The rephrasing of the text may include updating a verb comprised in the text. The rephrasing of the text may include normalizing updated text.

According to an embodiment, when the language model is implemented as a generative model, the rephrased text may be obtained by inputting the text to a generative model that is different from the generative model.

According to an embodiment, the generating of the information about the candidate function may include, from stored information about a function formed in the second language, selecting information about a candidate function based on similarity with the text. The generating of the information about the candidate function may include, based on a translation module, translating information about a candidate function formed in the second language into the first language.

According to an embodiment, the similarity may be calculated through a multilingual model trained based on data formed in the first language and data formed in the second language. The translation module may include an embedding that is identical to an embedding of the language model.

According to an embodiment, the generating of the prompt may include, based on the information about the candidate function and the rephrased text, generating candidate prompts. The generating of the prompt may include selecting the prompt from the candidate prompts.

According to an embodiment, the candidate prompts may include priorities assigned based on a linguistic feature of the first language.

According to an embodiment, the method may further include performing an operation corresponding to the output or providing a user with a response corresponding to the output.

An electronic device (e.g., the electronic device 101 of FIG. 1) may include at least one processor (e.g., the processor 120 of FIG. 1). The electronic device may include memory (e.g., the memory 130 of FIG. 1) storing instructions. The instructions, when individually or collectively executed by the at least one processor, may cause the electronic device to, based on a user input, obtain text indicating a command to be executed by the electronic device. The instructions, when individually or collectively executed by the at least one processor, may cause the electronic device to rephrase the text. The instructions, when individually or collectively executed by the at least one processor, may cause the electronic device to, based on the text, among functions supported by the electronic device, generate information about a candidate function translated into a language that is different from a language forming the supported functions. The instructions, when individually or collectively executed by the at least one processor, may cause the electronic device to, based on the rephrased text and the information about the candidate function, generate a prompt. The instructions, when individually or collectively executed by the at least one processor, may cause the electronic device to obtain an output corresponding to the user input by inputting the prompt to a language model. The rephrased text may be obtained by a language model that is different from the language model.

According to an embodiment, the text, the rephrased text, the prompt, and the information about the candidate function may be formed in a first language that forms the user input. The language model may be trained with training data formed in the first language and training data formed in a second language that is different from the first language, and the training data formed in the second language may be greater than the training data formed in the first language.

According to an embodiment, the instructions, when individually or collectively executed by the at least one processor, may cause the electronic device to update an ending or a particle of a word comprised in the text. The instructions, when individually or collectively executed by the at least one processor, may cause the electronic device to update a foreign-language word or a loanword comprised in the text. The instructions, when individually or collectively executed by the at least one processor, may cause the electronic device to update a verb comprised in the text. The instructions, when individually or collectively executed by the at least one processor, may cause the electronic device to normalize updated text.

According to an embodiment, when the language model is implemented as a generative model, the rephrased text may be obtained by inputting the text to a generative model that is different from the generative model.

According to an embodiment, the instructions, when individually or collectively executed by the at least one processor, may cause the electronic device to, from stored information about a function formed in the second language, select information about a candidate function based on similarity with the text. The instructions, when individually or collectively executed by the at least one processor, may cause the electronic device to, based on a translation module, translate information about a candidate function formed in the second language into the first language.

According to an embodiment, the similarity may be calculated through a multilingual model trained based on data formed in the first language and data formed in the second language. The translation module may include an embedding that is identical to an embedding of the language model.

According to an embodiment, the instructions, when individually or collectively executed by the at least one processor, may cause the electronic device to, based on the information about the candidate function and the rephrased text, generate candidate prompts. The instructions, when individually or collectively executed by the at least one processor, may cause the electronic device to select the prompt from the candidate prompts.

According to an embodiment, the candidate prompts may include priorities assigned based on a linguistic feature of the first language.

According to an embodiment, the instructions, when individually or collectively executed by the at least one processor, may cause the electronic device to perform an operation corresponding to the output or provide a user with a response corresponding to the output.

The electronic device according to various embodiments described herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the item, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "first," "second," "first," or "second" may be used simply to distinguish one component from another and may not limit the components with respect to other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various example embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one operation according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method of operating an electronic device (101), the method comprising:
based on a user input, obtaining text indicating a command to be executed by the electronic device (101);
rephrasing the text;
based on the text, among functions supported by the electronic device (101), generating information about a candidate function translated into a language that is different from a language forming the supported functions;
based on the rephrased text and the information about the candidate function, generating a prompt; and
obtaining an output corresponding to the user input by inputting the prompt to a language model,
wherein the rephrased text is obtained by a language model that is different from the language model.

2. The method of claim 1,
wherein the text, the rephrased text, the prompt, and the information about the candidate function are formed in a first language that forms the user input, and
the language model is trained with training data formed in the first language and training data formed in a second language that is different from the first language, and the training data formed in the second language is greater than the training data formed in the first language.

3. The method of one of claims 1 and 2,
wherein the rephrasing of the text comprises:
updating an ending or a particle of a word comprised in the text;
updating a foreign-language word or a loanword comprised in the text;
updating a verb comprised in the text; and
normalizing updated text.

4. The method of one of claims 1 to 3,
wherein, when the language model is implemented as a generative model, the rephrased text is obtained by inputting the text to a generative model that is different from the generative model.

5. The method of one of claims 1 to 4,
wherein the generating of the information about the candidate function comprises:
from stored information about a function formed in the second language, selecting information about a candidate function based on similarity with the text; and
based on a translation module, translating information about a candidate function formed in the second language into the first language.

6. The method of one of claims 1 to 5,
wherein the similarity is calculated through a multilingual model trained based on data formed in the first language and data formed in the second language, and
the translation module comprises an embedding that is identical to an embedding of the language model.

7. The method of one of claims 1 to 6,
wherein the generating of the prompt comprises:
based on the information about the candidate function and the rephrased text, generating candidate prompts; and
selecting the prompt from the candidate prompts.

8. The method of one of claims 1 to 7,
wherein the candidate prompts comprise priorities assigned based on a linguistic feature of the first language.

9. The method of one of claims 1 to 8, further comprising:
performing an operation corresponding to the output or providing a user with a response corresponding to the output.

10. A non-transitory computer-readable storage medium storing instructions that, when executed by a processor, cause the processor to perform the method of one of claims 1 to 9.

11. An electronic device (101) comprising:
at least one processor (120); and
a memory (130) storing instructions,
wherein the instructions, when individually or collectively executed by the at least one processor (120), cause the electronic device (101) to:
based on a user input, obtain text indicating a command to be executed by the electronic device (101),
rephrase the text,
based on the text, among functions supported by the electronic device (101), generate information about a candidate function translated into a language that is different from a language forming the supported functions,
based on the rephrased text and the information about the candidate function, generate a prompt, and
obtain an output corresponding to the user input by inputting the prompt to a language model,
wherein the rephrased text is obtained by a language model that is different from the language model.

12. The electronic device (101) of claim 11,
wherein the text, the rephrased text, the prompt, and the information about the candidate function are formed in a first language that forms the user input, and
the language model is trained with training data formed in the first language and training data formed in a second language that is different from the first language, and the training data formed in the second language is greater than the training data formed in the first language.

13. The electronic device (101) of one of claims 11 and 12,
wherein the instructions, when individually or collectively executed by the at least one processor (120), cause the electronic device (101) to:
update an ending or a particle of a word comprised in the text,
update a foreign-language word or a loanword comprised in the text,
update a verb comprised in the text, and
normalize updated text.

14. The electronic device (101) of one of claims 11 to 13,
wherein, when the language model is implemented as a generative model, the rephrased text is obtained by inputting the text to a generative model that is different from the generative model.

15. The electronic device (101) of one of claims 11 to 14,
wherein the instructions, when individually or collectively executed by the at least one processor (120), cause the electronic device (101) to:
from stored information about a function formed in the second language, select information about a candidate function based on similarity with the text, and
based on a translation module, translate information about a candidate function formed in the second language into the first language.
